# EUROPEAN PATENT SPECIFICATION

(11) **EP 3 995 406 B1**
(45) Date of publication and mention of the grant of the patent: **18.02.2026**
(21) Application number: 20835148.6
(22) Date of filing: 22.05.2020
(51) Int. Cl.: A47G 19/00, A47G 19/22, B32B 29/00, B65D 65/42, B65D 3/14, B65D 3/22

(54) **PAPER CONTAINER**
PAPIERCONTAINER
CONTENANT EN PAPIER

(30) Priority: 02.07.2019 JP 2019123476
(43) Date of publication of application: 11.05.2022
(73) Proprietor: Tokan Kogyo Co., Ltd., Tokyo 141-0022 (JP)
(72) Inventor: ASANO Makoto, Tokyo 141-0022 (JP)
(74) Representative: dompatent
(86) International application number: PCT/JP2020/020249
(87) International publication number: WO 2021/002113

(56) References cited:
- WO-A1-2012/064478
- GB-A- 2 504 166
- JP-A- 2014 037 265
- JP-A- 2015 227 171
- US-A- 5 766 709
- US-A1- 2005 184 136

## Description

### [Technical Field]

The present invention relates to a paper container that is formed of a body part blank and a bottom part blank each obtained by laminating a thin water-blocking layer, constituted of a resin material, on a surface of base paper, and that is prevented from leaking liquid.

### [Background Art]

Paper containers (paper cups) each including a body part, a bottom part and an open top are conventionally used. It is demanded that such paper cups do not leak liquid to the outside even if liquid such as drinking water is stored therein. Thus, body part blanks and bottom part blanks each obtained by laminating a water blocking layer, constituted of a resin material, on a surface of base paper on an inner surface side of the container are used for these paper cups.

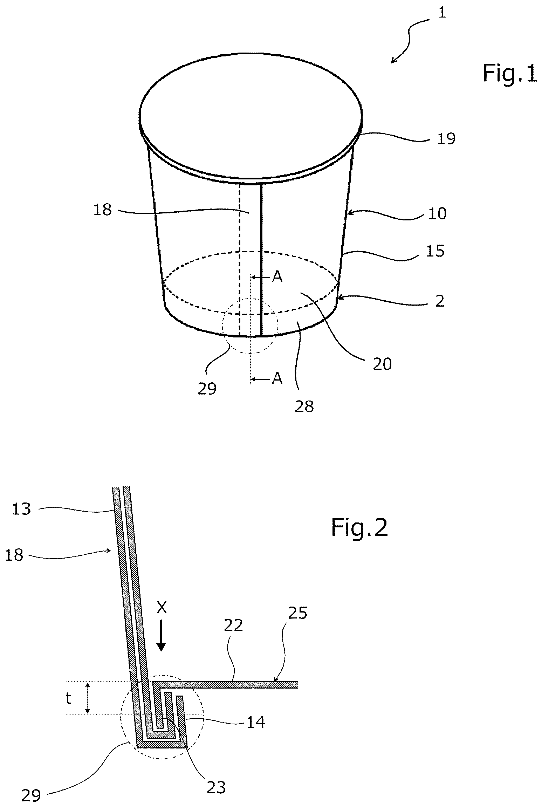

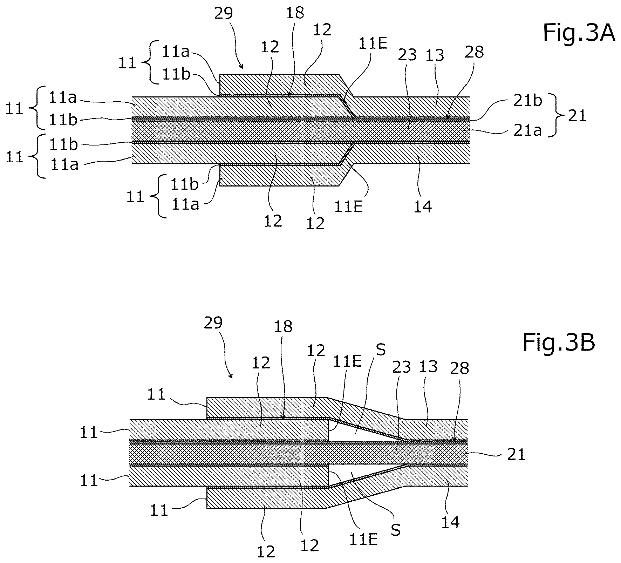

As shown in Figs. 1 and 2, a paper container is formed by sticking a body part piece 15 and a bottom part piece 25 together. The paper container has a longitudinally extending side sealing part 18 in a body part 10, and a circumferentially extending bottom sealing part 28 in the body part 10 and the bottom part 20. The side sealing part 18 is formed by tubularly winding the body part blank 11, and as shown in Fig. 3B, superposing and sticking, by heat sealing, both side end parts 12, 12 together. Thus, the side sealing part 18 has level differences around end parts 11E at the side end parts of the body part blank 11. In contrast, in the bottom sealing part 28, an adhering flap part 23 obtained by bending the outer circumferential edge of the bottom part blank 21 downward, and the body part blank 11 having the level differences are pressure-bonded. As a result, spaces S that are so-called triangle zones are formed in zones formed by the adhering flap part 23 and the level differences at the end edges of the side sealing part 18 (level differences including the end parts 11E) in a bottom difference portion 29 where the level differences of the side sealing part 18 and the bottom sealing part 28 cross each other. These spaces S are considered to be a major factor in leakage of liquid filling the paper container. When the body part piece 15 has a hem part 14 obtained by folding the lower end part of the body part blank 11, leakage of liquid from the paper container can be somewhat solved by forming the bottom sealing part 28 in a state where the adhering flap part 23 is held by this hem part 14. The effect of this is, however, insufficient. Rather, in the bottom difference portion 29, the number of the maximum layered sheets of the body part blank 11 and the bottom part blank 21 are five, which makes it impossible to sufficiently apply pressure all over the bottom difference portion 29 at the same level as the bottom sealing part 28 except the bottom difference portion 29 (place where three sheets are layered) when the bottom sealing part 28 is formed, hence suppression of formation of a space is difficult, which is problematic. Further, in a conventional paper container, a water blocking layer is constituted of a resin material having a glass transition point lower than 0°C which is in a minus temperature range, and the difference between the glass transition point and the melting point of this resin material is large. Therefore, at a temperature of at least the glass transition point, that is, being in a so-called rubbery state when the bottom sealing part 28 is released from the pressure after the formation (pressure bonding) thereof, the resin material of the water blocking layer exerts elastic characteristics so as to attempt to restore the state thereof to the state before the pressure bonding, and this results in formation of the spaces S in the bottom difference portion 29, which is also problematic.

To solve the foregoing problems, for example, the resin material constituting the water blocking layer is melted and the space S is filled therewith to block a liquid leakage path (for example, see Patent Literature 1).

Further background art relevant for the present invention is described in Patent Literatures 2-5.

### [Citation List]

### [Patent Literature]

[Patent Literature 1] Japanese Patent Application Publication No. 2007-091323
[Patent Literature 2] GB 2 504 166 A
[Patent Literature 3] WO 2012/064478 A1
[Patent Literature 4] US 5 766 709 A
[Patent Literature 5] US 2005/184136 A1

### [Summary of Invention]

### [Technical Problem]

In accordance with a strong request for environmental friendliness in recent years, it is demanded that the amount of the resin material used for the water blocking layer be reduced.

However, the water blocking layer is conventionally formed by lamination such as extrusion lamination on a resin having a thickness of, for example, approximately 20 µm. If this water blocking layer is thinned to have a thickness of, for example, approximately 10 µm for the purpose of reducing the amount of the used resin material, the resin material in a sufficient amount for filling the spaces S cannot be secured, and it is considered that as a result, a liquid leakage path cannot be reliably blocked.

The present invention is to solve the foregoing problems, and an object thereof is to provide a paper container capable of not only reducing a used resin material to a small amount, but also forming no space in zones formed by level differences at end edges of a side sealing part and an adhering flap part in a bottom difference portion, where the side sealing part and a bottom sealing part are layered, and suppressing formation of a liquid leakage path so as to elicit high liquid leakage prevention performance.

### [Solution to Problem]

It is provided a paper container according to claim 1.

### [Advantageous Effects of Invention]

According to the paper container of the present invention, the body part blank has a thin water-blocking layer constituted of a resin material, and the body part and the bottom part are in close contact with each other in the zones formed by the adhering flap part of the bottom part blank and the level differences at the end edges of the side sealing part in a cross section in the bottom difference portion where the side sealing part and the bottom sealing part are layered, whereby it can be suppressed to form spaces in the zones in the bottom difference portion. Thus, without any change in manufacturing steps from conventional steps and moreover with the used resin material reduced to a small amount, formation of a liquid leakage path is suppressed without formation of a space in the zones formed by the level differences at the end edges of the side sealing part and the adhering flap part, which can offer high liquid leakage prevention performance.

According to an embodiment of the present invention, the body part piece and the bottom part piece are integrally coupled via the bottom sealing part obtained by pressure-bonding the adhering flap part of the bottom part blank to be in a state where the adhering flap part is held between the main body part of the body part blank and the hem part, whereby a bottom end part of the bottom part piece is reliably wrapped in the hem part. Thus, not only higher liquid leakage prevention performance can be elicited, but also it can be suppressed to form a space in the zones formed by the level differences at the end edges of the side sealing part and the adhering flap part in the bottom difference portion.

According to an embodiment of the present invention, the bottom part blank has a thin water-blocking layer constituted of a resin material, whereby the paper container does not leak liquid to the outside even if liquid such as drinking water is stored therein, and can certainly offer high leakage prevention performance.

According to an embodiment of the present invention, the thin water-blocking layer has a thickness of 5 to 15 µm, whereby not only the amount of the resin material constituting the thin water-blocking layer can be reduced, but also it can be more certainly suppressed to form a space in the zones formed by the level differences at the end edges of the side sealing part and the adhering flap part in the bottom difference portion since the thickness of the thin water-blocking layer is extremely thin.

According to the present invention, the resin material constituting the thin water blocking-layer has a glass transition point of at least 0°C, whereby the temperature of the resin material constituting the thin water-blocking layer easily reaches the glass transition point or lower, that is, the thin water-blocking layer is easily into a glassy state after the bottom sealing part is heated and pressure-bonded. Therefore, the shape in the heating and pressure-bonding such that the body part and the bottom part are in close contact with each other in the bottom difference portion is easily held even when the bottom sealing part is cooled to normal temperature. As a result, it can be certainly suppressed to form a liquid leakage path in the zones formed by the level differences at the end edges of the side sealing part and the adhering flap part.

According to an embodiment of the present invention, the difference between the melting point and the glass transition point of the resin material constituting the thin water-blocking layer is 50°C or lower, whereby the shape of the bottom difference portion in the heating and pressure-bonding such that the body part and the bottom part are in close contact with each other is easily held even in cooling to normal temperature because the smaller the difference between the melting point and the glass transition point of the resin material is, the easier it is for the temperature of the resin material to reach the glass transition point or lower after heating and pressure-bonding, that is, the easier it is for the thin water-blocking layer to be in a glassy state, while the resin material has to be heated to the melting point or higher for heating and pressure-bonding the bottom sealing part. As a result, it can be more certainly suppressed to form a liquid leakage path in the zones formed by the level differences at the end edges of the side sealing part and the adhering flap part.

According to an embodiment of the present invention, the resin material constituting the thin water-blocking layer contains a polyolefin resin, whereby a hasty change in the thin water-blocking layer from a rubbery state before the bottom sealing part is heated and pressure-bonded to a glassy state after the bottom sealing part is heated and pressure-bonded can be certainly realized, which makes it easy to hold the shape of the bottom difference portion in the heating and pressure-bonding such that the body part and the bottom part are in close contact with each other even at normal temperature. As a result, it can be more certainly suppressed to form a liquid leakage path in the zones formed by the level differences at the end edges of the side sealing part and the adhering flap part.

According to an embodiment of the present invention it is provided closeness such that the areas of the zones formed by the level differences at the end edges of the side sealing part and the adhering flap part in the cross section in the bottom difference portion are each 0.03 mm² or lower, whereby it can be certainly suppressed to form a liquid leakage path in the zones formed by the level differences at the end edges of the side sealing part and the adhering flap part in the bottom difference portion where the side sealing part and the bottom sealing part are layered.

According to an embodiment of the present invention, the thin water-blocking layer is formed of a coating layer that is formed by coating base paper with the resin material, whereby it can be more certainly suppressed to form a liquid leakage path in the zones formed by the level differences at the end edges of the side sealing part and the adhering flap part in the bottom difference portion where the side sealing part and the bottom sealing part are layered.

### [Brief Description of Drawings]

[Fig. 1] Fig. 1 is an explanatory perspective view showing a structure of a paper container according to one embodiment of the present invention.
[Fig. 2] Fig. 2 is a longitudinal cross-sectional view taken along a cross section including a bottom difference portion (cross section including the dashed line) (cross-sectional view taken along the line indicated by the arrows A-A in Fig. 1) and showing the positional relationship between a body part piece and a bottom part piece of the paper container according to one embodiment of the present invention.
[Fig. 3A] Fig. 3A is a cross-sectional view showing one example of a structure of a cross section of the bottom difference portion of the paper container according to the present invention.
[Fig. 3B] Fig. 3B is a cross-sectional view showing one example of a structure of a cross section of a bottom difference portion of a conventional paper container.
[Fig. 4] Fig. 4 is a microscope image of a cross section of a bottom difference portion according to Example 1.
[Fig. 5] Fig. 5 is a microscope image of a cross section of a bottom difference portion according to Example 2.
[Fig. 6] Fig. 6 is a microscope image of a cross section of a bottom difference portion according to Comparative Example 1.

### [Description of Embodiments]

Hereinafter the present invention will be described in detail.

### [Paper Container]

As shown in Figs. 1, 2 and 3A, a paper container 1 according to one embodiment of the present invention has the body part 10 of a cylindrical inverted frustum, and the bottom part 20 blocking up the bottom of this body part 10. The top of the paper container 1 is open.

The body part 10 is formed of the body part piece 15 having: a main body part 13 of a cylindrical inverted circular cone where the longitudinally extending side sealing part 18 obtained by winding the body part blank 11 of a fan shape, and superposing and heat-sealing both of the side end parts 12, 12 together is formed; and the hem part 14 of a ring shape which is continuous from the lower end part of the main body part 13 and is folded upward inside. The top of the body part 10 is formed to be open. For example, the peripheral part of the opening is rolled outside to form a curling part 19.

The bottom part 20 is formed of the bottom part piece 25 having a flat part 22 that is in the center of the bottom part blank 21 and blocks up the bottom of the body part 10, and the adhering flap part 23 that is continuous from the outer periphery of this flat part 22 and is bent downward.

The body part piece 15 and the bottom part piece 25 are integrally coupled via the circumferentially extending bottom sealing part 28 that is heat-sealed in a state where the adhering flap part 23 of the bottom part piece 25 is held between the main body part 13 and the hem part 14 of the body part piece 15. Thereby the bottom of the body part 10 is blocked up by the bottom part 20. The bottom part piece 25 is adhered to a lower part of an inner wall of the main body part 13 of the body part piece 15 with the bottom thereof raised, whereby a bottom rim 2 of the paper container 1 is formed of the lower part of the main body part 13 of the body part piece 15, the hem part 14, and the adhering flap part 23 of the bottom part piece 25.

In the paper container 1 according to one embodiment of the present invention, the side end parts 12 of the body part blank 11 adhere to each other in the side sealing part 18, the lower part of the main body part 13 or the hem part 14 adheres to the adhering flap part 23 in the bottom sealing part 28, and further the body part 10 and the bottom part 20 are in close contact with each other even in the zones formed by the level differences at the end edges of the side sealing part 18 of the body part piece 15 and the adhering flap part 23 of the bottom part piece 25 in a cross section parallel to the flat part 22 of the bottom part piece 25 in the bottom difference portion 29 where the side sealing part 18 and the bottom sealing part 28 are layered.

In the present invention, "the body part and the bottom part are in close contact with each other" means that almost no space that is a so-called triangle zone is formed in the zones formed by the adhering flap part 23 of the bottom part piece 25 and the level differences at the end edges of the side sealing part 18 of the body part piece 15 (hereinafter also referred to as "specific difference zones") in a cross section of the bottom difference portion 29, that is, in the zones between an outer or inner circumferential face of the adhering flap part 23 of the bottom part piece 25, a thin water-blocking layer 11b of the main body part 13 of the body part piece 15 or that of the hem part 14, and the side end edges 11E of the body part blank 11. Specifically, "the body part and the bottom part are in close contact with each other" means that the areas of the specific difference zones in the following image measured using an area measurement function of Digital Microscope "VHX-6000" (manufactured by KEYENCE CORPORATION) at the magnification of 200 are each at most 0.03 mm²; the image is obtained by photographing a cross section taken along a plane parallel to the flat part 22 at any position of the bottom difference portion 29, downward (from the curling part 19, directed by X in Fig. 2). In the paper container 1 using the body part piece 15 having the hem part 14, the number of the maximum layered sheets of the blanks are five and there are two specific difference zones (on the outer and inner circumferential face sides of the adhering flap part 23). Here, "the body part and the bottom part are in close contact with each other" means that one of the specific difference zones having a larger area has an area of at most 0.03 mm².

Preferably, in the paper container 1 according to the present invention, the areas of the specific difference zones included in the cross sections taken along the lines 1 mm and 3 mm apart downward from the flat part 22 of the bottom part piece 25 in the bottom difference portion 29 in particular are each at most 0.02 mm².

The body part blank 11 has the thin water-blocking layer 11b constituted of a resin material at least on a surface of base paper 11a that is a chief material on the inner surface side of the container. The body part blank 11 may have a laminated structure of at least three layers including layers other than this thin water-blocking layer 11b. For example, a thin layer constituted of the resin material same as or different from the thin water-blocking layer 11b may be provided on a surface of the base paper 11a on the outer surface side of the container. Preferably, this thin layer on the outer surface side of the container also has a thickness of 5 to 15um. The bottom part blank 21 may have the same laminated structure as the body part blank 11. Specifically, the bottom part blank 21 may have a thin water-blocking layer 21b constituted of a resin material at least on a surface of base paper 21a that is a chief material on the inner surface side of the container.

For example, the base paper 11a and the base paper 21a are each formed of a paper material having a basis weight of 150 to 330 g/m².

The resin material constituting the thin water-blocking layers 11b and 21b preferably has a glass transition point of at least 0°C, which is more preferably at least 30°C, and particularly preferably at least 50°C.

The difference between the melting point and the glass transition point of the resin material constituting the thin water-blocking layers 11b and 21b is preferably at most 100°C, more preferably at most 70°C, and particularly preferably at most 50°C.

Use of a resin material having a glass transition point of at least 0°C, or a resin material having a melting point and a glass transition point such that the difference therebetween is at most 50°C as the resin material constituting the thin water-blocking layers 11b and 21b leads to suppression of formation of a space (triangle zone) in the specific difference zones. This is considered to be because of the following reasons. That is, the paper container 1 is made by (1) heating and melting the resin material in the area including the area to be the bottom sealing part 28 at the melting point or higher, and (2) applying pressure to this area to pressure-bond the area, to form the bottom sealing part 28. In the paper container 1 using the body part blank 11 and the bottom part blank 21 having the thin water-blocking layers 11b and 21b formed by applying a coating agent containing a resin material as described above, use of a resin material having a glass transition point of at least 0°C which is in a plus temperature range, or a resin material having a glass transition point and a melting point such that the difference therebetween is small results in the thin water-blocking layers 11b and 21b in a glassy state at the temperature when the bottom sealing part 28 is released from the pressure applied in the pressure bonding after (2) the pressure bonding. Therefore, the shape of the bottom difference portion 29 such that the body part 10 and the bottom part 20 are in close contact with each other in the pressure bonding is held even after the bottom sealing part 28 is released from the pressure. Thus, it is assumed that formation of a space in the specific difference zones is suppressed and formation of a liquid leakage path in the specific difference zones can be suppressed. In addition to the influence of the glass transition point, it is considered that the influence of characteristics of the base paper 11a and 21a becomes strong since the thinner the thin water-blocking layers 11b and 21b are, the less the influence of elastic characteristics of the resin material is.

In contrast, in a conventional general paper container, the thin water-blocking layer is formed of a laminate layer constituted of a resin material having a glass transition point lower than 0°C which is in a minus temperature range, and the difference of the glass transition point and the melting point of this resin material is large. Thus, the thin water-blocking layer is not in a glassy state but in a rubbery state at the temperature when the bottom sealing part is released from the pressure after (2) the pressure bonding. Therefore, it is assumed that when the bottom sealing part is released from the pressure, elastic characteristics such as to attempt to restore the shape to a state before the pressure-bonding are exhibited so that spaces (triangle zones) are formed in the specific difference zones.

As the resin material constituting the thin water-blocking layers 11b and 21b, for example, the following water-resistant and heat-sealing materials may be used: polyolefin resins such as polypropylene, modified polypropylenes, polyethylene, modified polyethylenes, polyethyleneimine, ethylene vinylacetate copolymers, polyolefin ionomers, ethylene acrylic acid copolymers, ethylene methylmethacrylate copolymers, ethylene vinylchloride copolymers, and ethylene methylacrylate copolymers; polyvinylalcohol resins; acrylic acid resins such as acrylic acid copolymers, and styrene acrylic acid copolymers; methacrylic acid resins such as polymethylmethacrylate, and methacrylic acid copolymers; polvinylchloride resins; polyvinylidenchloride resins; polyvinylacetate resins; polyurethane resins; polyester resins such as polyethyleneterephthalate, polybutylenesuccinate, polylactic acid, and polyhydroxyalkanoates; polyamide resins such as nylon 6 and nylon 6,6; polystyrene resins such as styrene maleic acid copolymers; and phenolic resins such as rosin-modified phenolic resins. A plurality of the foregoing materials may be used in combination. Among them, in view of water resistance, heat-sealing properties, the glass transition point, and so on, a polyolefin resin, particularly a polyolefin ionomer is preferably used. The same material is preferably used, but different materials may be used as the resin materials constituting the thin water-blocking layers 11b and 21b.

For example, the thin water-blocking layers 11b and 21b are each formed of a coating layer formed by coating a surface of the base paper with the resin material. The thin water-blocking layers 11b and 21b are not limited to such in a state where the surface of the base paper is completely coated, but the surface of the base paper may be partially exposed.

The coating layer may be obtained by applying an application solution of an aqueous medium and the resin material that is as a coating agent and is dispersed over the aqueous medium, onto the surface of the base paper, and drying the resultant at approximately 100°C.

The body part blank 11 may be subjected to edge treatment such as to prevent the end edge 11E which is at the side end part of at least the side sealing part 18 and are on the inner surface side of the main body part 13, from being exposed. The body part blank 11 subjected to edge treatment on the end edge 11E at the side end part can certainly suppress leakage of liquid from the side sealing part 18 and the bottom sealing part 28 in the obtained paper container 1.

The following are given as the edge treatment on the end edge 11E at the side end part in the body part blank 11: skiving of notching the side end part in the body part blank 11 on the outer surface side so that the thickness of the notched portion of the side end part is approximately half, folding the side end part having half the thickness toward the outer surface side, superposing the folded portion on the notched portion without any space, and adhering the portions; and resin coating of applying a resin onto the side end part including the end edge 11E in the body part blank 11 to seal the cross section.

The thin water-blocking layers 11b and 21b of the body part blank 11 and the bottom part blank 21 each preferably have a thickness of 5 to 15 µm. The thin water-blocking layers 11b and 21b each having an excessive thickness may lead to formation of spaces (triangle zones) in the specific difference zones in the bottom difference portion 29 to form a liquid leakage path. In contrast, the thin water-blocking layers 11b and 21b each having too small a thickness does not offer sufficient liquid leakage prevention performance for the body part blank 11 and the bottom part blank 21, which may lead to leakage of liquid from the bottom sealing part 28 and the side sealing part 18 when liquid is stored in the paper container 1.

### [Method for Manufacturing Paper Container]

The paper container 1 as described above may be manufactured by a known method. For example, the body part blank 11 and the bottom part blank 21 each having a proper shape are punched in a sheet material such that the thin water-blocking layers 11b and 21b are formed on the base paper 11a and 21a. Further, the bottom part piece 25 is made by bending the outer periphery of the bottom part blank 21 downward by drawing to form the adhering flap part 23.

The cylindrical main body part 13 is made by heating the side end parts 12, 12 of the body part blank 11, hoop-wrapping the body part blank 11 so that the thin water-blocking layers 11b, 11b are inside, and adhering the side end parts 12, 12 to each other with the melted resin material of the thin water-blocking layers 11b, 11b to form the side sealing part 18. Next, the bottom sealing part 28 is formed by heating the adhering flap part 23 of the bottom part piece 25 and a lower part of the main body part 13 included in the body part 10 so that the adhering flap part 23 of the bottom part piece 25 adheres to the inner wall of the lower part of the main body part 13 with the melted resin material of the thin water-blocking layers 11b and 21b, further folding the lower end of the main body part 13 upward inside to form the hem part 14, adhering the hem part 14 to the inner circumferential wall of the adhering flap part 23 to form the bottom rim 2, and pressurizing the formed bottom rim 2 to pressure-bond the adhering portion. Pressure-bonding include rolling-out (rolling bonding) and expanding. In either way, the adhering flap part 23 of the bottom part piece 25, and a lower part including the main body part 13 of the body part piece 15 and the hem part 14 are pressurized using a presser foot disposed inside the bottom rim 2. Further, the curling part 19 is formed by so-called curling of rolling to the outside the side end part of an upper side opening 22 of the body part 10. Thereby, the paper container 1 can be manufactured.

The heating temperature relating to the adhesion of the side sealing part 18 and the bottom sealing part 28 may be any temperature as long as the resin material constituting the thin water-blocking layers 11b and 21b is at the melting point or higher in the adhering.

According to the paper container 1 of one embodiment of the present invention, the body part blank 11 has the thin water-blocking layers 11b and 21b constituted of a resin material, and the body part 10 and the bottom part 20 are in close contact with each other in the specific difference zones in the bottom difference portion 29 in a cross section of the bottom difference portion 29 where the side sealing part 18 and the bottom sealing part 28 are layered, whereby it can be suppressed to form a space (triangle zone) in the bottom difference portion 29 which is conventionally formed in the specific difference zones. Thus, it can be suppressed to form a liquid leakage path in the specific difference zones in the bottom difference portion 29 with a small amount of the resin material used.

The paper container 1 as described above can be offered for various purposes. For example, the paper container 1 may be used as a container for drink, and a container for putting any other various contents therein.

### Examples

Specific examples of the present invention will be hereinafter described. The present invention is not limited to these examples.

### [Example 1]

A body part blank was prepared by laminating coating layers (inner and outer layers) each having a thickness of 10 µm and coated with a coating agent "CHEMIPEARL" (from Mitsui Chemicals, Inc., glass transition point: 52°C, melting point: 91°C) on both sides of base paper A having a basis weight of 280 g/m². A bottom part blank was also prepared by laminating a coating layer (inner layer) having a thickness of 10 µm and coated with a coating agent "CHEMIPEARL" (from Mitsui Chemicals, Inc.) on one side of base paper B having a basis weight of 200 g/m². Here, the coating layers of the body part blank and the bottom part blank were formed under the conditions that the coating method was flexography (letterpress printing), and the number of times of coating was three. Using them, a paper container [1] in the form of a cup was made according to a known technique by making a bottom part piece by bending the outer periphery of the bottom part blank downward to form an adhering flap part, tubularly assembling both side end parts of the body part blank so as to layer the side end parts on each other, sealing a side sealing part by heat and pressure, fitting the bottom part piece into an inside lower part of this tubular body, holding the adhering flap part by a hem part obtained by bending a lower end part of the body part piece upward inside, and sealing a bottom sealing part by heat and pressure.

### [Example 2]

A paper container [2] in the form of a cup was made in the same manner as Example 1 except that the thicknesses of the inner and outer layers of the body part blank, and the thickness of the inner layer of the bottom part blank were each changed to 5 µm as shown in Table 1.

### [Example 3]

A paper container [3] in the form of a cup was made in the same manner as Example 1 except that a printing layer was further provided outside the outer layer of the body part blank.

### [Example 4]

A paper container [4] in the form of a cup was made in the same manner as Example 2 except that a printing layer was further provided outside the outer layer of the body part blank.

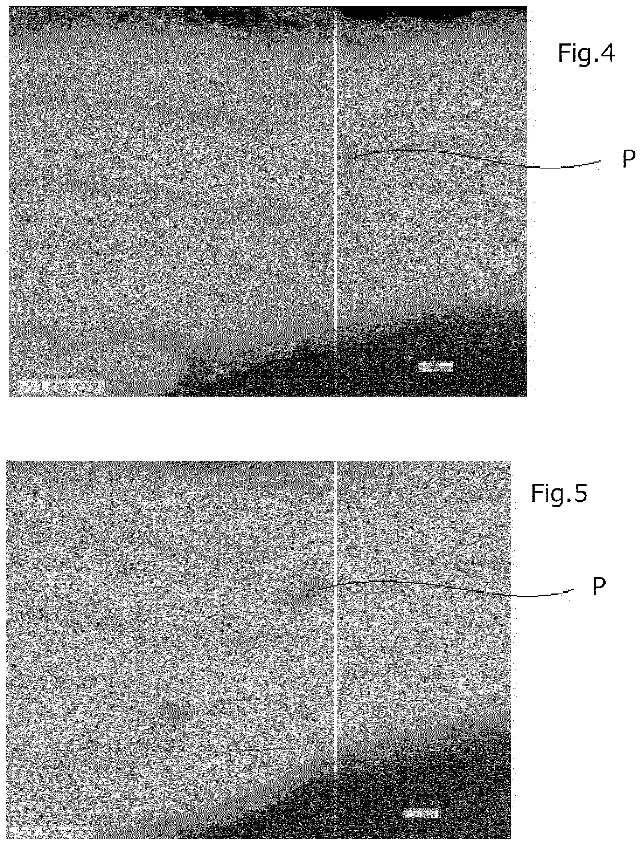

As shown in Fig. 2, a bottom difference portion of each of the paper containers [1] to [4] in the form of a cup was taken along planes parallel to a flat part of the bottom part piece at positions apart from the flat part downward by t (t = 1 mm, 3 mm and 5 mm), and the obtained cross sections were photographed downward (directed by X in Fig. 2) using Digital Microscope "VHX-6000" (manufactured by KEYENCE CORPORATION) at the magnification of 200. As a result, it was confirmed that there was almost no space (so-called triangle zone) in specific difference zones in all the cross sections, and the body part and the bottom part were in close contact with each other. The results of measurement of the areas of the specific difference zones using an area measurement function are shown in Table 2 below. A numeral value of one of the two specific difference zones having a larger area is shown. Figs. 4 and 5 show digital microscope images of the paper containers [1] and [2] in the form of a cup, respectively. In Figs. 4 and 5, the specific difference zones are indicated by the reference sign P.

### [Example 5]

A paper container [5] in the form of a cup was made in the same manner as Example 1 except that the coating layers of the body part blank and the bottom part blank were formed under the conditions that the coating method was gravure printing (intaglio printing), and the number of times of coating was two.

### [Comparative Example 1]

A paper container [6] in the form of a cup was made in the same manner as Example 1 except that a body part blank prepared by laminating a laminate layer (inner layer) constituted of a polyethylene resin (from Tosoh Corporation) having a thickness of 20 µm on one side of the base paper A, and laminating a laminate layer (outer layer) constituted of a polyethylene resin (from Tosoh Corporation) having a thickness of 15 µm on the other side of the base paper A by extrusion lamination was used, and except that a bottom part blank prepared by laminating a laminate layer (inner layer) constituted of a polyethylene resin (from Tosoh Corporation) having a thickness of 30 µm on one side of the base paper B was used.

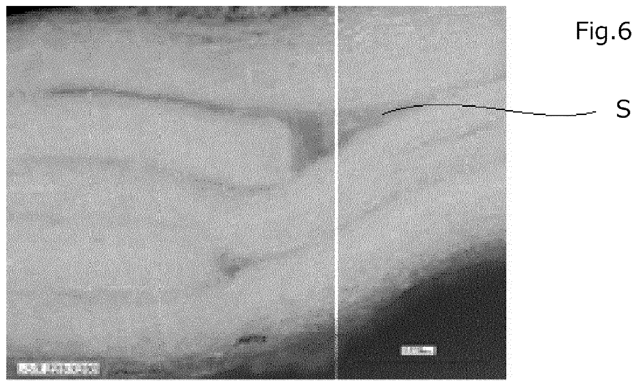

In the same manner as the foregoing, a bottom difference portion of the paper container [6] in the form of a cup was taken along planes parallel to a flat part of the bottom part piece at positions apart from the flat part downward by t (t = 1 mm, 3 mm and 5 mm), and the obtained cross sections were photographed downward (directed by X in Fig. 2) using Digital Microscope "VHX-6000" (manufactured by KEYENCE CORPORATION) at the magnification of 200. As a result, it was confirmed that spaces (so-called triangle zones) were clearly present in the specific difference zones in all the cross sections. The results of measurement of the areas of the specific difference zones using an area measurement function are shown in Table 2 below. A numeral value of one of the two specific difference zones having a larger area is shown. Fig. 6 shows a digital microscope image of the paper container [6] in the form of a cup. In Fig. 6, the specific difference zone is indicated by the reference sign S.

The paper containers [1] to [6] in the form of a cup were each subjected to a liquid leakage test such that: the paper container in the form of a cup was put on a metal stand with the top thereof open; an examination medium (0.05% Score roll aqueous solution) was poured into the paper container in the form of a cup until the level of the medium reached two thirds the height of the container; after the container was left to ambient for 10 minutes, it was observed whether the examination medium was present on the surface of the metal stand after the container was removed. Evaluation was performed as the case where no examination medium was present at all on the stand was indicated by "o", and the case where there was the examination medium on the stand was indicated by "×". The results are shown in Table 2.

**[Table 1]**

| | | Inner layer | | Base paper | Outer layer | | Printing layer |
|---|---|---|---|---|---|---|---|
| | | Structure | Thickness (*µ*m) | | Structure | Thickness (*µ*m) | |
| Example 1 | Body part blank | Coating layer | 10 | Base paper A | Coating layer | 10 | - |
| | Bottom part blank | Coating layer | 10 | Base paper B | - | | - |
| Example 2 | Body part blank | Coating layer | 5 | Base paper A | Coating layer | 5 | - |
| | Bottom part blank | Coating layer | 5 | Base paper B | - | | - |
| Example 3 | Body part blank | Coating layer | 10 | Base paper A | Coating layer | 10 | Yes |
| | Bottom part blank | Coating layer | 10 | Base paper B | - | | - |
| Example 4 | Body part blank | Coating layer | 5 | Base paper A | Coating layer | 5 | Yes |
| | Bottom part blank | Coating layer | 5 | Base paper B | - | | - |
| Example 5 | Body part blank | Coating layer | 10 | Base paper A | Coating layer | 10 | - |
| | Bottom part blank | Coating layer | 10 | Base paper B | - | | - |
| Comparative Example 1 | Body part blank | Laminate layer | 20 | Base paper A | Laminate layer | 15 | Yes |
| | Bottom part blank | Laminate layer | 30 | Base paper B | - | | - |

**[Table 2]**

| | Area of specific difference zone (mm²) | | | Evaluation of leakage of liquid |
|---|---|---|---|---|
| | Taken at position 1 mm apart | Taken at position 3 mm apart | Taken at position 5 mm apart | |
| Example 1 | 0.017 | 0. 008 | 0.015 | ○ |
| Example 2 | 0. 007 | 0.018 | 0.014 | ○ |
| Example 3 | 0.014 | 0.012 | 0. 007 | ○ |
| Example 4 | 0.013 | 0. 006 | 0.010 | ○ |
| Example 5 | 0.024 | 0.015 | 0. 030 | ○ |
| Comparative Example 1 | 0.095 | 0.064 | 0.033 | × |

The paper container according to one embodiment of the present invention has been described above. The present invention is not limited to the above embodiment, but various modifications may be added thereto as long as the gist of the present invention does not change.

For example, the paper container may have such a structure that the lower part of the body part piece is not folded. That is, the paper container may have such a structure that the body part piece does not have the hem part of a ring shape, which is continuous from the lower end part of the main body part and is folded inside upward, and the body part piece and the bottom part piece are integrally coupled via a bottom sealing part obtained by pressure-bonding the adhering flap part of the bottom part piece to the lower part of the main body part of the body part piece in a state where the adhering flap part faces the inner surface of the lower part. In the bottom difference portion of such a paper container, the number of the maximum layered sheets of the blanks are three, but there is almost no space in the specific difference zones.

For example, the thin water-blocking layers may be layers each obtained by layering the resin material on the surface of the base paper by any type of lamination such as extrusion lamination and dry lamination.

For example, the paper container is not limited to a cup-shaped container. The paper container may have any shape as long as being a paper container having the side sealing part and the bottom sealing part formed by sticking and uniting two pieces of the body part piece and the bottom part piece. For example, the body part may be in the form of a straight tube.

For example, a paper container made of the body part and the bottom part is used as a cup main body, and has such a structure that, for example, an embossed paper sheet is wound so as to cover the outer circumferential face of the body part of this cup main body.

### [Reference Signs List]

- 1: Paper container
- 2: Bottom rim
- 10: Body part
- 11: Body part blank
- 11a: Base paper
- 11b: Thin water-blocking layer
- 11E: Side end edge
- 12: Side end part
- 13: Main body part
- 14: Hem part
- 15: Body part piece
- 18: Side sealing part
- 19: Curling part
- 20: Bottom part
- 21: Bottom part blank
- 21a: Base paper
- 21b: Thin water-blocking layer
- 22: Flat part
- 23: Adhering flap part
- 25: Bottom part piece
- 28: Bottom sealing part
- 29: Bottom difference portion

## Claims

1. A paper container having a body part (10), and a bottom part (20) that blocks up a bottom of the body part (10), wherein
the body part (10) is formed of a body part piece (15) having a tubular main body part having a side sealing part (18) obtained by superposing both side end parts (12) of a body part blank (11) on each other,
the bottom part (20) is formed of a bottom part piece (25) having a flat part (22) blocking up the bottom of the body part (10) in a center of the bottom part blank (21), and an adhering flap part (23) that is continuous from an outer periphery of the flat part (22) and is bent downward,
the body part piece (15) and the bottom part piece (25) are formed to be integrally coupled via a bottom sealing part (28) obtained by pressure-bonding the adhering flap part (23) to an inner surface of the main body part (13) in a state where the adhering flap part (23) faces the inner surface,
the body part blank (11) has a thin water-blocking layer (11b) constituted of a resin material at least on a surface thereof on an inner surface side of the container, and
the body part (10) and the bottom part (20) are in close contact with each other in zones formed by the adhering flap part (23) and level differences at end edges (11E) of the side sealing part (18) in a cross section parallel to the flat part (22) in a bottom difference portion (29) where the side sealing part (18) and the bottom sealing part (28) are layered,
**characterized in that**
the resin material constituting the thin water-blocking layer (11b, 21b) has a glass transition point of at least 0°C.

2. The paper container according to claim **1,** wherein
the body part piece (15) has the main body part (13), and a hem part (14) having a ring shape, the hem part (14) being continuous from a lower end part of the main body part (13) and being folded to an inner side upward, and
the body part piece (15) and the bottom part piece (25) are formed to be integrally coupled via a bottom sealing part (28) obtained by pressure-bonding the adhering flap part (23) to be in a state where the adhering flap part (23) is held between the main body part (13) and the hem part (14).

3. The paper container according to claim 1 or 2, wherein
the bottom part blank (21) has a thin water-blocking layer (21b) constituted of a resin material at least on the surface of the container on the inner surface side.

4. The paper container according to any one of claims 1 to 3, wherein
the thin-water blocking layer has a thickness of 5 to 15 µm.

5. The paper container according to any one of claims 1 to 4, wherein
a difference between a melting point and the glass transition point of the resin material constituting the thin water-blocking layer (11b, 21b) is 50°C or lower.

6. The paper container according to any one of claims 1 to 5, wherein
the resin material constituting the thin water-blocking layer (11b, 21b) contains a polyolefin resin.

7. The paper container according to any one of claims 1 to 6, wherein
areas of the zones formed by the adhering flap part (23) and the differences at the end edges (11E) of the side sealing part (18) in the cross section parallel to the flat part (22) in the bottom difference portion (29) are each 0.03 mm² or lower.

8. The paper container according to any one of claims 1 to 7, wherein
the thin water-blocking layer (11b, 21b) is formed of a coating layer that is formed by coating base paper (11a, 21a) with the resin material.

## Patentansprüche

1. Papierbehälter mit einem Körperteil (10) und einem Bodenteil (20), das einen Boden des Körperteils (10) verschließt, wobei
das Körperteil (10) aus einem Körperteilstück (15) mit einem rohrförmigen Hauptkörperteil mit einem seitlichen Dichtungsteil (18) ausgebildet ist, das durch Übereinanderlegen der beiden seitlichen Endteile (12) eines Körperteilrohlings (11) erhalten wird,
das Bodenteil (20) aus einem Bodenteilstück (25) ausgebildet ist, das ein flaches Teil (22), das den Boden des Körperteils (10) in einer Mitte des Bodenteilrohlings (21) verschließt, und ein anhaftendes Klappenteil (23) aufweist, das von einem Außenumfang des flachen Teils (22) aus durchgehend ist und nach unten gebogen ist,
das Körperteilstück (15) und das Bodenteilstück (25) so ausgebildet sind, dass sie über ein Bodendichtungsteil (28) einstückig gekoppelt sind, das durch Druckverklebung des anhaftenden Klappenteils (23) mit einer Innenfläche des Hauptkörperteils (13) in einem Zustand erhalten wird, in dem das anhaftende Klappenteil (23) der Innenfläche zugewandt ist,
der Körperteilrohling (11) eine dünne wasserblockierende Schicht (11b) aufweist, die aus einem Harzmaterial zumindest auf einer Oberfläche davon auf einer Innenflächenseite des Behälters besteht, und
das Körperteil (10) und das Bodenteil (20) in Zonen, die durch das anhaftenden Klappenteil (23) und Höhenunterschiede an Endkanten (11E) des seitlichen Dichtungsteils (18) in einem Querschnitt parallel zum flachen Teil (22) in einem Bodenunterschiedsabschnitt (29) ausgebildet werden, wo das seitliche Dichtungsteil (18) und das Bodendichtungsteil (28) geschichtet sind, in engem Kontakt zueinander stehen,
**dadurch gekennzeichnet, dass**
das Harzmaterial, aus dem die dünne wasserblockierende Schicht (11b, 21b) besteht, einen Glasübergangspunkt von mindestens 0 °C hat.

2. Papierbehälter nach Anspruch 1, wobei
das Körperteilstück (15) das Hauptkörperteil (13) und ein Saumteil (14) mit einer Ringform aufweist, wobei das Saumteil (14) von einem unteren Endteil des Hauptkörperteils (13) durchgehend ist und zu einer Innenseite nach oben gefaltet ist, und
das Körperteilstück (15) und das Bodenteilstück (25) so ausgebildet sind, dass sie über ein Bodendichtungsteil (28) einstückig gekoppelt sind, das durch Druckverklebung des anhaftenden Klappenteils (23) erhalten wird, um in einem Zustand zu sein, in dem das anhaftende Klappenteilstück (23) zwischen dem Hauptkörperteil (13) und dem Saumteil (14) gehalten wird.

3. Papierbehälter nach Anspruch 1 oder 2, wobei
der Bodenteilrohling (21) eine dünne wasserblockierende Schicht (21b) aufweist, die aus einem Harzmaterial zumindest auf der Oberfläche des Behälters auf der Innenflächenseite besteht.

4. Papierbehälter nach einem der Ansprüche 1 bis 3, wobei
die dünne wasserblockierende Schicht eine Dicke von 5 bis 15 µm hat.

5. Papierbehälter nach einem der Ansprüche 1 bis 4, wobei
eine Differenz zwischen einem Schmelzpunkt und dem Glasübergangspunkt des Harzmaterials, das die dünne wasserblockierende Schicht (11b, 21b) bildet, 50 °C oder weniger beträgt.

6. Papierbehälter nach einem der Ansprüche 1 bis 5, wobei
das Harzmaterial, aus dem die dünne wasserblockierende Schicht (11b, 21b) besteht, ein Polyolefinharz enthält.

7. Papierbehälter nach einem der Ansprüche 1 bis 6, wobei
Bereiche der von dem anhaftenden Klappenteil (23) ausgebildeten Zonen und die Differenzen an den Endkanten (11E) des seitlichen Dichtungsteils (18) im Querschnitt parallel zum flachen Teil (22) im Bodendifferenzabschnitt (29) jeweils 0,03 mm² oder weniger betragen.

8. Papierbehälter nach einem der Ansprüche 1 bis 7, wobei
die dünne wasserblockierende Schicht (11b, 21b) aus einer Beschichtungsschicht ausgebildet wird, die durch Beschichten von Rohpapier (11a, 21a) mit dem Harzmaterial gebildet wird.

## Revendications

1. Contenant en papier présentant une partie corps (10), et une partie fond (20) qui bloque un bas de la partie corps (10), dans lequel la partie corps (10) est formée d'une pièce de partie corps (15) ayant une partie corps principal tubulaire qui présente une partie de fermeture latérale (18) obtenue par superposition des deux parties d'extrémité latérales (12) d'une ébauche de partie corps (11) l'une sur l'autre,
la partie fond (20) est formée d'une pièce de partie fond (25) ayant une partie plate (22) qui ferme le bas de la partie corps (10) au niveau d'un centre de l'ébauche de partie fond (21), et d'une partie rabat adhésif (23) qui est continue depuis une périphérie externe de la partie plate (22) et courbée vers le bas,
la pièce de partie corps (15) et la pièce de partie fond (25) sont formées de façon à être couplées d'un seul tenant par l'intermédiaire d'une partie de fermeture de fond (28) obtenue par soudage par pression de la partie rabat adhésif (23) à une surface interne de la partie corps principal (13) dans un état dans lequel la partie rabat adhésif (23) fait face à la surface interne, l'ébauche de partie corps (11) présente une fine couche de blocage d'eau (11b) constituée d'un matériau de résine au moins sur une surface de celle-ci sur un côté de surface interne du récipient, et
la partie corps (10) et la partie fond (20) se trouvent en contact étroit l'une avec l'autre dans des zones formées par la partie rabat adhésif (23) et les différences de niveau au niveau de bords d'extrémité (11E) de la partie de fermeture latérale (18) selon une coupe parallèle à la partie plate (22) d'une portion inférieure à différences (29) dans laquelle la partie de fermeture latérale (18) et la partie de fermeture de fond (28) sont superposées, **caractérisé en ce que**
le matériau de résine constituant la fine couche de blocage d'eau (11b, 21b) présente un point de transition vitreuse d'au moins 0 °C.

2. Contenant en papier selon la revendication 1, dans lequel la pièce de partie corps (15) présente la partie corps principal (13), et une partie ourlet (14) a une forme d'anneau, la partie ourlet (14) étant continue depuis une partie d'extrémité inférieure de la partie corps principal (13) et étant repliée vers le haut vers un côté interne, et
la pièce de partie corps (15) et la pièce de partie fond (25) sont formées de façon à être couplées d'un seul tenant par l'intermédiaire d'une partie de fermeture de fond (28) obtenue par soudage par pression de la partie rabat adhésif (23) pour être dans un état dans lequel la partie rabat adhésif (23) est retenue entre la partie corps principal (13) et la partie ourlet (14).

3. Contenant en papier selon la revendication 1 ou 2, dans lequel l'ébauche de partie fond (21) présente une fine couche de blocage d'eau (21b) constituée d'un matériau de résine au moins sur la surface du contenant, sur le côté de surface interne.

4. Contenant en papier selon l'une quelconque des revendications 1 à 3, dans lequel
la fine couche de blocage d'eau présente une épaisseur de 5 à 15 µm.

5. Contenant en papier selon l'une quelconque des revendications 1 à 4, dans lequel
une différence entre un point de fusion et le point de transition vitreuse du matériau de résine constituant la fine couche de blocage d'eau (11b, 21b) est de 50 °C ou moins.

6. Contenant en papier selon l'une quelconque des revendications 1 à 5, dans lequel
le matériau de résine constituant la fine couche de blocage d'eau (11b, 21b) contient une résine de polyoléfine.

7. Contenant en papier selon l'une quelconque des revendications 1 à 6, dans lequel
les aires des zones formées par la partie rabat adhésif (23) et les différences au niveau des bords d'extrémité (11E) de la partie de fermeture latérale (18) selon la coupe parallèle à la partie plate (22) de la portion inférieure à différences (29) sont chacune de 0,03 mm² ou moins.

8. Contenant en papier selon l'une quelconque des revendications 1 à 7, dans lequel
la fine couche de blocage d'eau (11b, 21b) est formée d'une couche de revêtement qui est formée en appliquant le matériau de résine sur un papier de base (11a, 21a).
